# EUROPEAN PATENT APPLICATION

(11) **EP 4 843 823 A1**
(43) Date of publication of application: **25.11.2026**
(21) Application number: 25742311.1
(22) Date of filing: 16.01.2025
(51) Int. Cl.: B60L 55/00, H02M 7/68, H02J 3/32, H02J 9/06, H02M 1/00

(54) **POWER CONVERSION DEVICE**

(30) Priority: 16.01.2024 KR 20240007021; 16.01.2024 KR 20240007026; 23.01.2024 KR 20240010474; 01.02.2024 KR 20240016298; 02.07.2024 KR 20240086762
(71) Applicant: LG Innotek Co., Ltd., Seoul 07796 (KR)
(72) Inventor: PARK, Jeong Heum, Seoul 07796 (KR); JANG, Ju Young, Seoul 07796 (KR)
(74) Representative: DREISS Patentanwälte PartG mbB
(86) International application number: PCT/KR2025/099047
(87) International publication number: WO 2025/155163

(57) **Abstract**

A power conversion device according to an embodiment of the present invention comprises: a first switching unit that is turned on when a power failure occurs; a power failure signal generation unit that supplies auxiliary power to a power conversion unit when the first switching unit is turned on, and transmits a power failure signal; a control unit that requests power to be supplied from a vehicle and controls the power conversion unit; and the power conversion unit that converts power under the control of the control unit; wherein the power conversion unit receives power from the vehicle, converts and outputs to a load.

## Description

### [Technical Field]

The teachings in accordance with exemplary and non-limiting embodiments of this invention relate generally to power conversion device.

### [Background Arts]

Solar power generation is an eco-friendly energy production method that is becoming widely adopted as a replacement for conventional fossil fuel and nuclear power generation. Solar power systems come in two types: off-grid systems, in which batteries are connected to a converter, and grid-connected systems, which are linked to the power grid. Generally, off-grid systems consist of solar cells, storage batteries, and power conversion devices, while grid-connected systems are designed to exchange power with the utility grid through load lines.

Since the electricity generated by solar panels cannot be directly supplied to a load or the power grid, it is converted into usable electricity via power conversion devices such as inverters. Additionally, electricity generated by solar panels can be stored in batteries, and the stored electricity can be supplied to a load or the grid. In this case, a DC-DC converter is used to control the charging and discharging of the battery. When multiple batteries are configured in parallel, the DC-DC converter that converts the battery power also performs voltage balancing between the batteries. The load of the power conversion device may include a home (residential) vehicle charging device.

A home vehicle charging device performs the operation of charging a vehicle's battery using AC power from the grid. When using AC power from the grid, problems arise such as difficulty in charging the vehicle and difficulty in using household appliances in the event of a power outage.

### [Summary of Invention]

### [Technical Subjects]

The technical problem that the present invention seeks to solve is to provide a power conversion device capable of operating during a power failure. Furthermore, the invention provides a power conversion device capable of controlling multiple power conversion units connected in parallel. Additionally, the invention provides a power conversion device capable of initial operation through communication with an MLPE.

### [Technical Solutions]

To solve the aforementioned technical problems, a power conversion device according to an embodiment of the present invention may comprise: a first switching unit that is turned on when a power failure occurs; a power failure signal generation unit that supplies auxiliary power to a power conversion unit when the first switching unit is turned on, and transmits a power failure signal; a control unit that requests power to be supplied from a vehicle and controls the power conversion unit; and the power conversion unit that converts power under the control of the control unit; wherein the power conversion unit receives power from the vehicle, converts and outputs to a load.

Preferably, but not necessarily, the power conversion device may further comprise a battery connected to the power failure signal generation unit, and the power failure signal generation unit may receive power from the battery when the first switching unit is turned on and output it to the power conversion unit.

Preferably, but not necessarily, the power failure signal generation unit may include a voltage reception unit that receives a first voltage from the power conversion unit, and the power failure signal generation unit may transmit the power failure signal to the power conversion unit if the voltage reception unit does not receive the first voltage when the first switching unit is turned on.

Preferably, but not necessarily, the power failure signal generation unit may not generate the power failure signal if the voltage reception unit receives the first voltage when the first switching unit is turned on.

Preferably, but not necessarily, when the power conversion unit receives power from the vehicle, it may supply the first voltage to the power failure signal generation unit.

Preferably, but not necessarily, the first switching unit may include a physical switch operated by an external force.

Preferably, but not necessarily, the power conversion device may further comprise a communication unit that operates using an auxiliary power source during a power failure and transmits the power supply to the vehicle.

Preferably, but not necessarily, the communication unit may receive status information regarding the vehicle's battery from the vehicle and transmit it to the control unit.

Preferably, but not necessarily, the load may include household (home) loads.

Preferably, but not necessarily, the power conversion unit may convert power input from a grid and output it to the vehicle, and convert power input from the vehicle and output it to the load.

To solve the aforementioned technical problem, the power conversion device according to the second embodiment of the present invention may comprise: a first power conversion unit connected to a solar power generation (photovoltaic) module; a second power conversion unit connected to a grid; a DC-link connected between the first power conversion unit and the second power conversion unit; and a plurality of third power conversion units connected to the DC-link and to an energy storage device.

Preferably, but not necessarily, the plurality of third power conversion units may include a third-1 power conversion unit and a third-2 power conversion unit connected in parallel, and may include a switching element connecting between input/output terminals of the third-1 power conversion unit and input/output terminals of the third-2 power conversion unit.

Preferably, but not necessarily, the plurality of third power conversion units may be connected to a single energy storage device, the switching element may be turned on, and the third-1 power conversion unit and the third-2 power conversion unit may be connected to the single energy storage device.

Preferably, but not necessarily, the input/output terminals of the third-1 power conversion unit may be connected to the energy storage device, and the input/output terminals of the third-2 power conversion unit may be connected to the energy storage device via the switching element.

Preferably, but not necessarily, the third-1 power conversion unit and the third-2 power conversion unit may be controlled using an interleaving method.

Preferably, but not necessarily, the plurality of third power conversion units may be connected to two energy storage devices, the switching elements may be turned off, and the third-1 power conversion unit and the third-2 power conversion unit may each be individually connected to one of the two energy storage devices.

Preferably, but not necessarily, the third-1 power conversion unit and the third-2 power conversion unit may be controlled independently.

Preferably, but not necessarily, the power conversion device includes a control unit that controls the third power conversion unit, and when communication is established with the energy storage device, the control unit turns off the switching element and measures the voltage of the third-1 power conversion unit and the voltage of the third-2 power conversion unit, and if only one of the voltage of the third-1 power conversion unit and the voltage of the third-2 power conversion unit is measured, turns on the switching element, and if both the voltage of the third-1 power conversion unit and the voltage of the third-2 power conversion unit are measured, turns off the switching element.

Preferably, but not necessarily, after turning on the switching element, the control unit may control the third-1 power conversion unit and the third-2 power conversion unit using an interleaving method.

Preferably, but not necessarily, the first power conversion unit and the third power conversion unit may be DC-DC converters, and the second power conversion unit may be an inverter.

Preferably, but not necessarily, to solve the aforementioned technical problems, the power conversion device according to the third embodiment of the present invention may comprise: a first power conversion unit connected to a solar power generation (photovoltaic) module; a second power conversion unit connected to a grid; a DC-link connected between the first power conversion unit and the second power conversion unit; an auxiliary power generation unit that generates auxiliary power using the power from the DC-link; a communication unit that communicates with a control device of the solar power generation module; and a fifth power conversion unit that converts power from the DC-link and supplies it to the communication unit, wherein the fifth power conversion unit converts power from the DC-link and applies it to the communication unit when the voltage of the DC-link is below a first voltage.

Preferably, but not necessarily, when the voltage of the DC link is greater than the first voltage, the fifth power conversion unit may cease operation, and the auxiliary power generation unit can generate the auxiliary power using the DC link voltage.

Preferably, but not necessarily, the fifth power conversion unit may include a boost converter.

Preferably, but not necessarily, the communication unit may receive power from the fifth power conversion unit and transmit an operation signal to the control device of the solar power generation module.

Preferably, but not necessarily, when the control device of the solar power generation module performs an RSD (Rapid Shut Down) operation, the voltage of the DC link may drop below the first voltage.

Preferably, but not necessarily, the control device of the solar power generation module may include an MLPE.

Preferably, but not necessarily, the communication unit may perform power line communication with the control device of the solar power generation module.

Preferably, but not necessarily, the auxiliary power generation unit may include a third power conversion unit that converts the DC power of the DC-link, and a fourth power conversion unit that converts the AC power from the grid into DC power and supplies it to the third power conversion unit.

Preferably, but not necessarily, the fourth power conversion unit may operate when the voltage of the DC link is lower than the second voltage.

Preferably, but not necessarily, the DC link may be electrically connected to an energy storage device, and the auxiliary power generation unit can generate the auxiliary power using power from any one of the solar power generation module, the energy storage device, or the grid, which is supplied to the DC link. To solve the technical problems described above, the power conversion device according to the fourth embodiment of the present invention may comprise: a first power conversion unit connected to a solar power generation module; a second power conversion unit connected to a grid; a DC-link connected between the first power conversion unit and the second power conversion unit; an auxiliary power generation unit that generates auxiliary power using power from the DC-link; a communication unit that communicates with a control device of the solar power generation module; and a communication power supply unit that supplies power from the DC-link to the communication unit, wherein the communication power supply unit applies power from the DC-link to the communication unit when the voltage of the DC-link is below a first voltage.

Preferably, but not necessarily, if the voltage of the DC link is higher than the first voltage, the communication power supply unit may cease supplying power from the DC link to the communication unit, and the auxiliary power generation unit may generate the auxiliary power using the DC link voltage.

Preferably, but not necessarily, the communication power supply unit may include a bypass circuit.

Preferably, but not necessarily, the communication unit may receive power from the communication power supply unit and transmit an operation signal to the control device of the solar power generation module.

Preferably, but not necessarily, when the control device of the solar power generation module performs an RSD (Rapid Shut Down) operation, the voltage of the DC-link may become lower than the first voltage.

Preferably, but not necessarily, Furthermore, the control device of the solar power generation module may include an MLPE.

Preferably, but not necessarily, the communication unit may perform power line communication with the control device of the solar power generation module.

Preferably, but not necessarily, the auxiliary power generation unit may include a third power conversion unit that converts the DC power of the DC-link, and a fourth power conversion unit that converts the AC power of the grid into DC power and supplies it to the third power conversion unit.

Preferably, but not necessarily, the fourth power conversion unit may operate when the voltage of the DC-link is lower than the second voltage.

Preferably, but not necessarily, the DC-link may be electrically connected to an energy storage device, and the auxiliary power generation unit may generate the auxiliary power using power from any one of the solar power generation module, the energy storage device, or the grid supplied to the DC-link.

### [Advantageous Effects]

According to embodiments of the present invention, the power conversion device can operate using a battery configured as an auxiliary power source during a power failure. Furthermore, during a power failure, it can supply power to household loads in conjunction with the vehicle's battery.

In addition, the device includes multiple DC-DC converters that perform the charging and discharging of the battery and can connect one or more energy storage systems (ESS). For a single energy storage system, two DC-DC converters can operate in an interleaved configuration to reduce heat generation and distribute power consumption. By applying a separate DC-DC converter to each of multiple energy storage systems, rapid charging and discharging can be performed without the need for voltage balancing.

Furthermore, even if the grid and energy storage system are powered off while the solar power generation modules are powered on and the MLPE is in RSD mode, the initial operation of the PV inverter is possible through a power switch configuration that enables PLC communication using the DC-link power supply of approximately 10-30 V.

### [Brief Description of Drawings]

FIG. 1 is a block diagram of a power conversion device according to a first embodiment of the present invention.

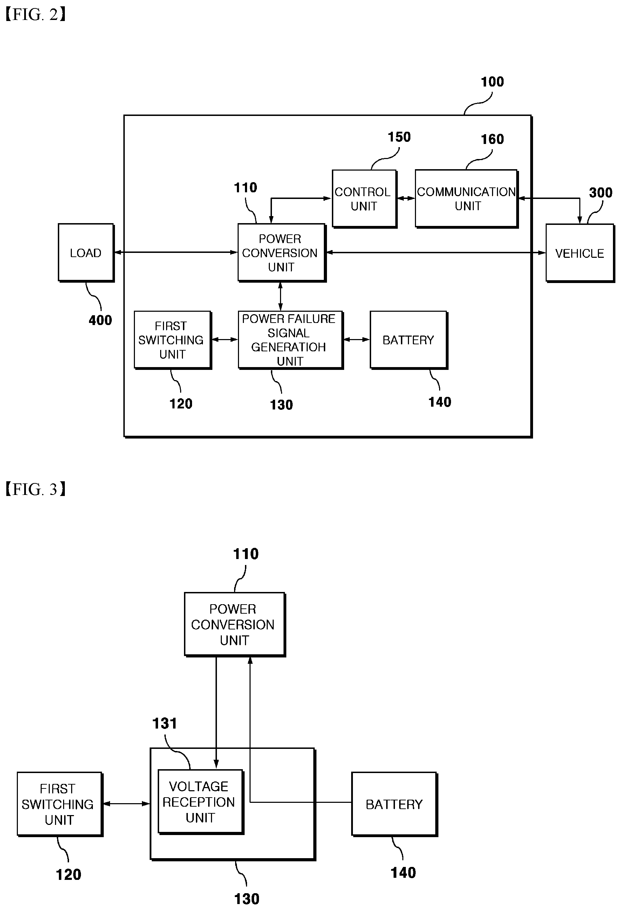

FIGS. 2 through 4 are block diagrams of a power conversion device according to embodiments of the present invention.
FIGS. 5 and 6 are drawings illustrating a system configuration in which a power conversion device according to an embodiment of the present invention is applied.
FIG. 7 is a diagram illustrating the operation of a power conversion device according to an embodiment of the present invention.
FIG. 8 illustrates a system in which a power conversion device according to a second embodiment of the present invention is applied.
FIG. 9 is a block diagram of a power conversion device according to a second embodiment of the present invention.
FIGS. 10 through 15 are drawings illustrating the configuration of a power conversion device according to a second embodiment of the present invention.
FIG. 16 illustrates a system in which a power conversion device according to a third embodiment of the present invention is applied.
FIG. 17 is a block diagram of a power conversion device according to a third embodiment of the present invention.
FIGS. 18 through 22 are drawings for explaining the configuration of a power conversion device according to a third embodiment of the present invention.
FIG. 23 is a block diagram of a power conversion device according to a fourth embodiment of the present invention.
FIGS. 24 through 27 are drawings for explaining the configuration of a power conversion device according to the embodiment shown in FIG. 23.

### [Best Modes]

Hereinafter, a preferred embodiment of the present invention will be described in detail with reference to the accompanying drawings.

However, the technical concept of the present invention is not limited to the embodiments described herein but may be implemented in various different forms; within the scope of the technical concept of the present invention, one or more components from the embodiments may be selectively combined or substituted.

Furthermore, terms used in the embodiments of the present invention (including technical and scientific terms), unless explicitly defined otherwise, may be interpreted in the sense generally understood by a person skilled in the art to which the present invention pertains, and terms commonly used, such as those defined in dictionaries, may be interpreted considering their contextual meaning in the relevant technical field.

Furthermore, the terms used in the embodiments of the present invention are intended to describe the embodiments and are not intended to limit the scope of the present invention.

In this specification, unless otherwise specified, the singular form may include the plural form, and where a phrase is written as "A and at least one of B and C," it may include one or more of all possible combinations of A, B, and C.

Furthermore, in describing the components of the embodiments of the present invention, terms such as "first," "second," "A," "B," "(a)," and "(b)" may be used. These terms are intended merely to distinguish the component from other components and do not limit the nature, order, or sequence of the component.

Furthermore, when it is stated that a component is "connected," "coupled," or "joined" to another component, this may include not only cases where the component is directly "connected," "coupled," or "joined" to the other component, but also cases where the component is "connected," "coupled," or "joined" to the other component via another component situated between them.

Furthermore, when it is described that a component is formed or arranged "above" or "below" another component, 'above' or "below" includes not only cases where the two components are in direct contact with each other, but also cases where one or more other components are formed or arranged between the two components. Furthermore, when expressed as "upper" or "lower," this may include not only the upward direction but also the downward direction relative to a single component.

Variations according to this invention may include some features from one embodiment and some features from another embodiment. That is, a variation may include one of the various embodiments, with some features omitted and some corresponding features from another embodiment included. Alternatively, the opposite may be true. The features, structures, and effects described in the embodiments are included in at least one embodiment and are not necessarily limited to a single embodiment. Furthermore, the features, structures, and effects illustrated in each embodiment may be combined or modified by a person skilled in the art to which the embodiments pertain and applied to other embodiments. Therefore, matters related to such combinations and modifications should be interpreted as falling within the scope of the embodiments.

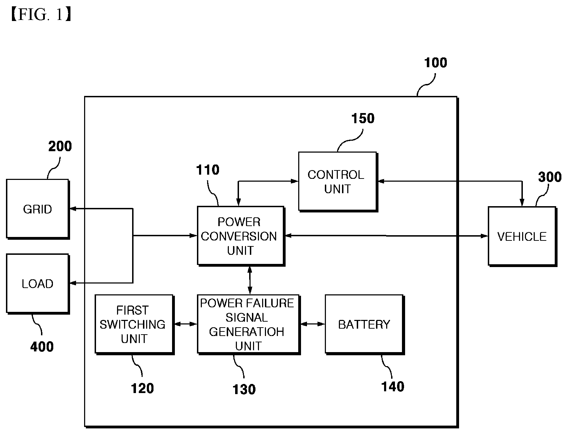

FIG. 1 is a block diagram of a power conversion device (100) according to an embodiment of the present invention.

The power conversion device (100) according to an embodiment of the present invention may comprise a power conversion unit (110), a first switching unit (120), a power failure signal generation unit (130), and a control unit (150), and may further include a battery (140), a communication unit (160), a second switching unit (520), and a third switching unit (510). The power conversion device (100) according to an embodiment of the present invention may be a bidirectional EV charger, which is a vehicle charging device.

The power conversion unit (110) converts and outputs the input power. It can receive AC power from the grid (200), convert it into DC power, and output it to a vehicle (300). In addition to the grid, power can also be supplied from DC power sources such as solar power generation modules or batteries. The vehicle (300) is a vehicle that includes a battery charged via the power conversion device (100) and may be an electric vehicle or a hybrid vehicle. Furthermore, the power conversion unit (110) can receive DC power from the vehicle (300), convert it into AC power, and output it to a load (400). The load (400) may include household loads. It may include household loads such as lighting fixtures or home appliances where the power conversion device (100) is installed. The load (400) may operate by receiving power from the grid (200) or by receiving power output from the power conversion unit (110). The power conversion unit (110) may be a bidirectional AC-DC converter capable of converting power in both directions.

The first switching unit (120) turns on during a power failure. Here, a power failure refers to a state in which power is not supplied from the grid (200); if the power supply from the grid (200) is interrupted, the operation of the power conversion unit (110) or the load (400), which was operating by receiving power from the grid (200), may cease. The first switching unit (120) may include a switch or relay that is turned off under normal conditions and turned on during a power failure.

The first switching unit (120) may include a physical switch operated by an external force. In the event of a power failure, the first switching unit (120) may be activated by an external force applied by a person or an external device. Alternatively, it may be turned on in response to an operation signal from an external device.

The power failure signal generation unit (130) supplies auxiliary power to the power conversion unit (110) when the first switching unit (120) is turned on and transmits a power failure signal. When the first switching unit (120) turns on during a power failure, the power failure signal generation unit (130) transmits a power failure signal from the power failure signal generation unit (130) to the power conversion unit (110). At this time, the power failure signal generation unit (130) can provide auxiliary power to the power conversion unit (110) so that the power conversion unit (110) can operate.

The power failure signal generation unit (130) can operate when the first switching unit (120) is turned on, as this creates a path for current flow. At this time, a power failure signal, such as an enable signal, can be transmitted to the power conversion unit (110) via a communication line or power line connecting the power failure signal generation unit (130) and the power conversion unit (110).

The battery (140) may be connected to the power failure signal generation unit (130), and the power failure signal generation unit (130) may receive power from the battery (140) when the first switching unit (120) is turned on and output it to the power conversion unit (110). When the first switching unit (120) is turned on, a power connection is established between the battery (140), the power failure signal generation unit (130), and the power conversion unit (110), allowing the battery (140) to supply power to the power conversion unit (110) as an auxiliary power source.

The power failure signal may be transmitted to the power conversion unit (110) via a separate communication line from the auxiliary power source. Alternatively, the power failure signal may be transmitted to the power conversion unit (110) via PLC communication or similar means along with the auxiliary power source.

The control unit (150) requests power supply to the vehicle (300) based on a power failure signal and controls the power conversion unit (110). The control unit (150) can control the power conversion unit (110) to convert power in both directions. That is, the control unit (150) can control the power conversion unit (110) to receive power input from the grid (200), convert it, and output it to the vehicle (300), or control the power conversion unit (110) to receive power input from the vehicle (300), convert it, and output it to the load (400). When the control unit (150) receives a power failure signal generated by the power failure signal generation unit (130) via the power conversion unit (110) or directly, it can request power supply to the vehicle (300) in accordance with the power failure signal. The control unit (150) may be a controller that controls the power conversion unit (110). Alternatively, it may be an SECC (Supply Equipment Communication Controller) that controls the communication of the power conversion device (100). The SECC (Supply Equipment Communication Controller), as a supply device communication controller, communicates with the EVCC (Electric Vehicle Communication Controller) in the vehicle to control the connection between the charging equipment and the vehicle, as well as the charging process.

Furthermore, the control unit may include a communication unit (160) that operates using the auxiliary power source during a power failure and supplies power to the vehicle (300). The communication unit (160) may communicate with the vehicle's communication unit (330) to control the power conversion unit (110) and the vehicle's power conversion unit (320) so that they are connected to each other to transfer power. Here, the communication unit (160) may be an SECC, and the vehicle's communication unit (330) may be an EVCC. The communication unit (160) may be an SECC, and the control unit (150) may be the controller of the power conversion unit (110).

The vehicle (300) may include a communication unit (330) that is an EVCC, a vehicle battery (310), and a vehicle's power conversion unit (320)-which is a PDU (Power Distribution Unit) that receives power from the power conversion device (100) to charge the battery (310). Here, the vehicle's power conversion unit (320) may be an HV junction box, and the vehicle's battery (310) may be an HV battery. Furthermore, the vehicle (300) may include a VCU (Vehicle Control Unit) that drives the vehicle using power from the vehicle's battery (310). The EVCC, which is the vehicle's communication unit (330), can control the vehicle's battery (310), the vehicle's power conversion unit (320), and the VCU (not shown) by performing CAN communication, or receive BMS (Battery Management System) data, among other things.

The communication unit (160) may receive status information regarding the vehicle's battery (310) from the vehicle (300) and transmit it to the control unit (150). Here, the status information of the vehicle's battery (310) may be BMS data. The control unit (150) may control the power conversion unit (110) using the status information of the vehicle's battery (310).

When the control unit (150) receives a power failure signal, it can control the power conversion unit (110) to receive power from the vehicle (300), convert it, and output it to the load (400). The power conversion unit (110) may receive power from the vehicle's (300) battery (310), convert it, and output it to the load (400). The power conversion unit (110) may convert the DC power from the vehicle's battery (310) into AC power and output it to the load (400).

The power failure signal generation unit (130) may include a voltage reception unit (131) that receives a first voltage from the power conversion unit (110). The power failure signal generation unit (130) may transmit a power failure signal to the power conversion unit (110) if the voltage reception unit (131) does not receive the first voltage when the first switching unit (120) is turned on. The power failure signal generation unit (130) may not generate a power failure signal when the voltage reception unit (131) receives the first voltage upon turn-on of the first switching unit (120).

The voltage reception unit (131) may receive a first voltage from the power conversion unit (110) during normal operation, as opposed to a power failure state. If the first switching unit (120) is turned on and is not receiving the first voltage from the power conversion unit (110), this indicates that the power conversion unit (110) has stopped operating; therefore, the power failure signal generation unit (130) may supply the auxiliary power to the power conversion unit (110) and transmit a power failure signal. Through this, the power conversion unit (110) may receive power input from the vehicle (300), convert it, and output it to the load (400). When the power conversion unit (110) receives power from the vehicle (300), it can supply the first voltage to the power failure signal generation unit (130) again. The power failure signal generation unit (130) serves to restart the power conversion unit (110) that has stopped operating due to a power failure, and when the power conversion unit (110) is operating normally, it stops generating the power failure signal upon receiving the first voltage. As a result, the first switching unit (120) can be turned off again, and the auxiliary power supply to the battery (140) is cut off, thereby reducing the battery's power consumption.

If the power conversion unit (110) is receiving a first voltage from the power conversion unit (110), this indicates that it is operational; therefore, even if the first switching unit (120) is turned on, the power failure signal generation unit (130) may not transmit a power failure signal or auxiliary power to the power conversion unit (110). This helps prevent malfunctions of the first switching unit (120). Alternatively, even if the first switching unit (120) is turned on, if it is receiving a first voltage from the power conversion unit (110), the power failure signal generation unit (130) may transmit the power failure signal but not supply the auxiliary power source.

The power conversion unit (110) may be connected to the grid (200) or the load (400) via the backup box (500). The backup box may include a second switching unit (520) that connects the load (400) to the power conversion unit (110) and a third switching unit (510) that connects the grid (200) to the power conversion unit (110). Here, the second switching unit (520) and the third switching unit (510) may include relays.

Under normal conditions, the second switching unit (520) and the third switching unit (510) are turned on, allowing power from the grid (200) to be input to the power conversion unit (110) and supplied to the load (400). During a power failure, the third switching unit (510) connected to the grid (200) is turned off, disconnecting the connection to the grid (200), while the second switching unit (520) connected to the load (400) is turned on, allowing power output from the power conversion unit (110) to be supplied to the load (400).

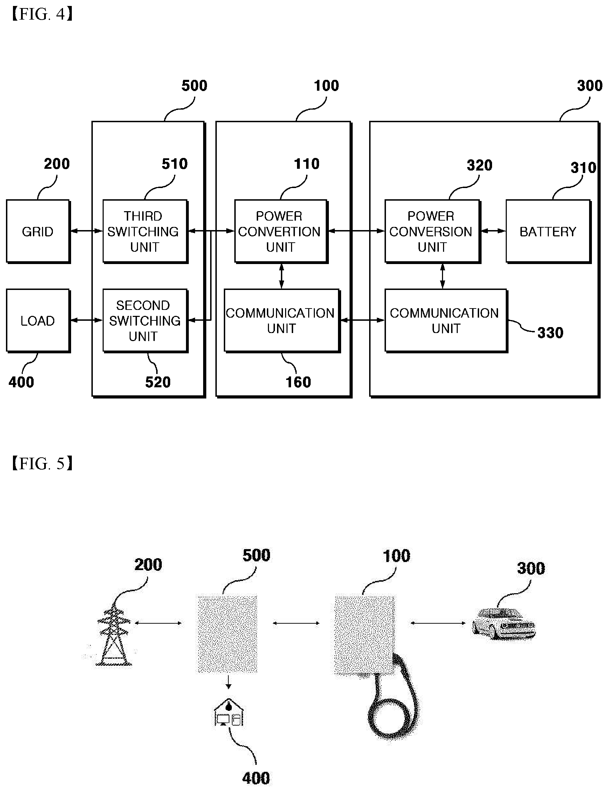

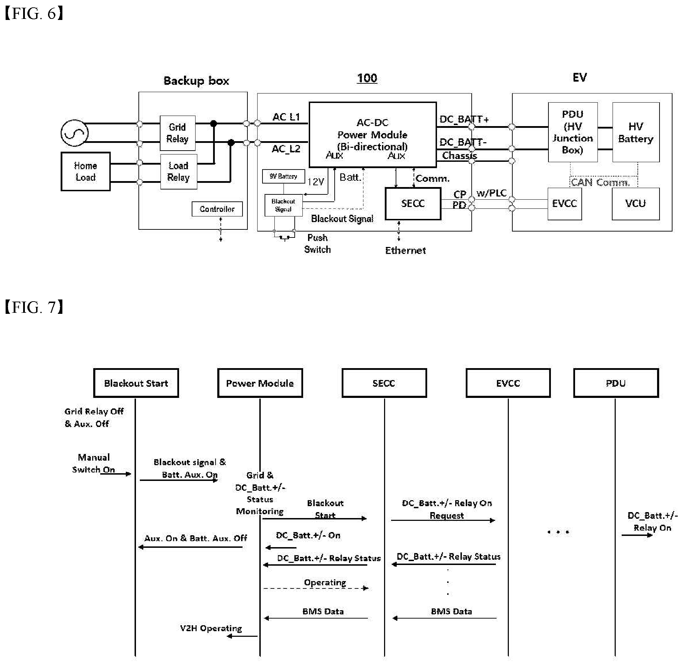

A system in which the power conversion device (100) according to an embodiment of the present invention is applied may be configured as shown in FIGS. 5 and 6. The power conversion device (100) may be connected to a vehicle (300) and may be connected to the grid (200) and a household load (400) via a backup box (500). The power conversion device (100) can convert power input from the grid (200) via the backup box (500) and supply it to the vehicle (300) to charge the vehicle's (300) battery, and convert power input from the vehicle's (300) battery and supply it to the load (400) via the backup box (500). The backup box (500) may also supply power input from the grid (200) to the load (400).

The power conversion unit (110) of the power conversion device (100) may be a bidirectional AC-DC power module, the first switching unit (120) may be a push switch, and the battery (140) may be a 9V battery. The control unit (150) or communication unit (160) may be an SECC.

The power module may be connected to the grid via a grid relay in the backup box and to the household load via a load relay in the backup box. The power module may be connected to a battery (HV battery) via the PDU of an electric vehicle (EV) (300). The SECC may communicate with the vehicle's EVCC.

If 12V is applied to the power failure signal generation unit in the power module but is not applied during a power failure, and if a push switch is pressed to turn it on during the power failure, a power failure (blackout) signal is applied to the power module, and power from a 9V battery can be supplied to the power module as an auxiliary power source (aux). This allows the power module to operate, and the SECC also operates on auxiliary power to communicate with the vehicle's EVCC. The power module receives power from the vehicle's battery, converts it, and supplies the power to the household load.

In the event of a power failure, the system may operate as shown in FIG. 7. When a power failure occurs, the grid relay turns off, cutting off the power supply from the grid and thereby also cutting off the auxiliary power supply. At this time, if the switch is manually turned on, the power failure signal and power from the 9V battery are transmitted to the power module as auxiliary power sources. The power module transmits the power failure signal to the SECC, and the SECC transmits a power supply signal to the vehicle's EVCC. Here, the power supply request signal may include a request to turn on the connection relay (DC_Batt +/- relay) to the vehicle (300). The EVCC transmits the power supply signal to the PDU, supplying power from the vehicle's battery to the power module. The EVCC transmits connection status and battery status information to the SECC, and the SECC transmits this to the power module, enabling the power module to operate and perform V2H (Vehicle to Home Load) operations by supplying power converted by the power module to household loads.

This allows the system to operate using the vehicle battery as a backup power source during a power failure and to supply power to household loads by linking with the vehicle battery during a power failure.

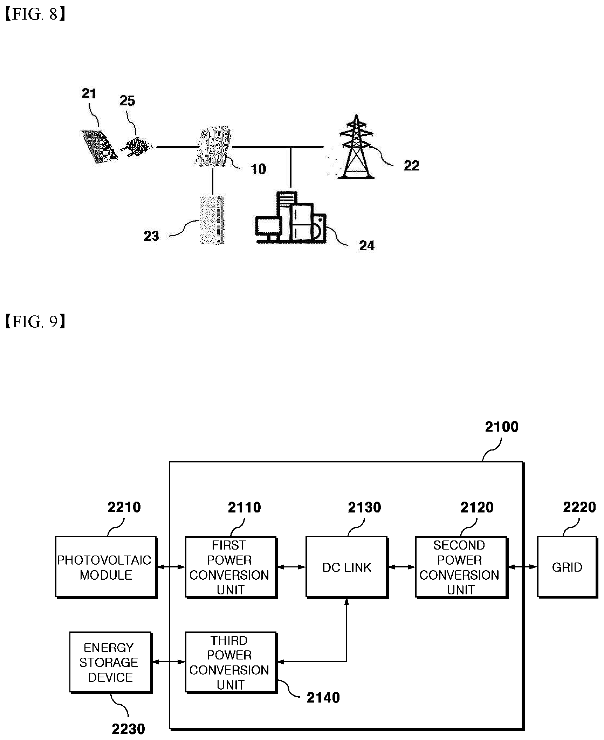

FIG. 8 illustrates a system in which the power conversion device according to a second embodiment of the present invention is applied.

The power conversion device (10) according to the second embodiment of the present invention may constitute a solar power generation system together with a solar power generation (photovoltaic) module (21), an energy storage device (23), a load (24), and a grid (22).

The solar power generation module (210) may include module-level power electronics (MLPE, 25) that control the solar cells to operate at the maximum power point (MPP), which is the operating point where power is maximized under various conditions. The MLPE (25) may be referred to as an optimizer. In solar power generation, depending on the characteristics of the relationship between current and voltage, as well as the relationship between voltage and power, the maximum power may not be achieved at the maximum voltage, but rather at a voltage level of approximately 80% of the maximum voltage. Since this maximum power point continuously changes depending on the magnitude of the voltage and current generated by the solar panel, it is necessary to continuously search for the point where the maximum power can be achieved. In other words, to track maximum power rather than maximum voltage, the magnitude of the voltage and current may be varied to achieve maximum power. In other words, the voltage can be decreased to a direction where the power is increased, or the current is increased, the voltage is increased, and the current is decreased.

The power conversion device (10) according to an embodiment of the present invention may be connected to the MLPE (25) of a solar power generation module (21) to receive power output from the solar power generation module (21), and may convert the received power to supply it to a load (24), transmit it to the grid (22), or charge an energy storage device (23). Alternatively, the power conversion device may convert power stored in the energy storage device (23) to supply it to the load (24), or receive power from the grid (22) to supply it to the load (24) or convert it to charge the energy storage device (23). To transmit and receive power between each component, the power must be converted to a level suitable for each component. The power conversion device (10) according to an embodiment of the present invention is disposed between each component and serves to convert power.

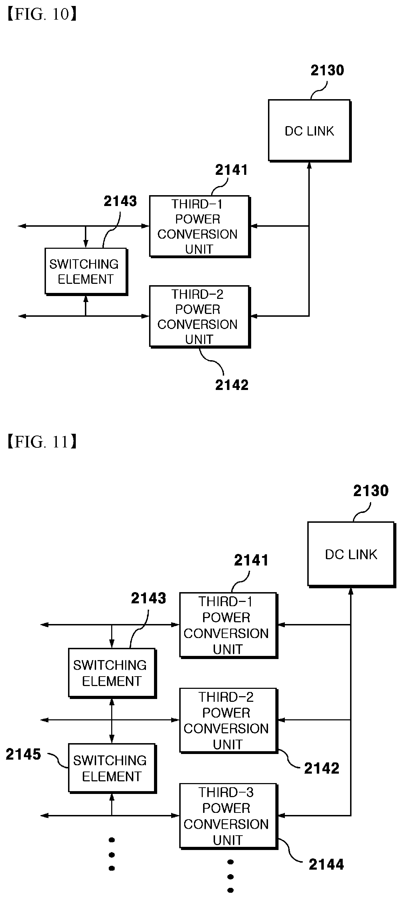

FIG. 9 is a block diagram of the power conversion device according to a second embodiment of the present invention, and FIGS. 10 to FIG. 15 are drawings for explaining the configuration of the power conversion device according to the second embodiment of the present invention.

A power conversion device (2100) according to an embodiment of the present invention may comprise a first power conversion unit (2110), a second power conversion unit (2120), a DC-link (2130), and a third power conversion unit (2140), and may further comprise a control unit (2150), a communication unit (2, not shown), and the like.

The first power conversion unit (2110) is connected to a solar power generation module (2210). The first power conversion unit (2110) receives power input from the solar power generation module (2210) and converts it. The solar power generation module (2210) may include an MLPE, and the first power conversion unit (2110) may receive power input through the MLPE. The communication unit may perform power line communication (PLC) with the MLPE. Here, the first power conversion unit (2110) may include a DC-DC converter. The first power conversion unit (2110) may include a DC-DC converter that converts the voltage of the DC power from the solar power generation module (2210) to the voltage of the power to be output to the DC link (2130) and outputs it.

The second power conversion unit (2120) is connected to the grid (2220). The second power conversion unit (2120) may be connected to a load. The second power conversion unit (2120) can convert power input to the DC-link (2130) and output it to the grid (2220), or convert power input from the grid (2220) and output it to the DC-link (2130). Here, the first power conversion unit (2110) may include an inverter. It may include a bidirectional DC-AC inverter that converts power input to the DC-link (2130), which is DC power, from DC to AC and outputs it to the grid (2220), or converts power input from the grid (2220) from AC to DC and outputs it to the DC-link (2130).

The third power conversion unit (2140) is connected to the energy storage device (2230). The third power conversion unit (2140) may convert power input to the DC-link (2130) and output it to the energy storage device (2230), or convert power input from the energy storage device (2230) and output it to the DC-link (2130). Here, the third power conversion unit (2140) may include a DC-DC converter. The third power conversion unit (2140) may include a DC-DC converter that converts the voltage of the DC power input to the DC-link (2130) into a voltage for charging the energy storage device (2230), or converts the voltage of the power from the energy storage device (2230) and outputs it to the DC-link (2130).

The DC link (2130) is connected between the first power conversion unit (2110) and the second power conversion unit (2120). The DC-link (2130) is connected between the first power conversion unit (2110), the second power conversion unit (2120), and the third power conversion unit (2140), serving to transfer power output from each power conversion unit to the other power conversion units. The DC-link (2130) may include a DC-link capacitor. Power input to the DC-link is stored in the DC-link capacitor and can be output through the DC-link capacitor.

The third power conversion unit (2140) may include a plurality of third power conversion units. The plurality of third power conversion units includes a third-1 power conversion unit (2141) and a third-2 power conversion unit (2142) connected in parallel, and may include a switching element (2143) connecting input/output terminals of the third-1 power conversion unit (2141) to input/output terminals of the third-2 power conversion unit (2142).

The third-1 power conversion unit (2141) and the third-2 power conversion unit (2142) may have the same specifications. Alternatively, they may have different specifications depending on the connected energy storage device (2230), and either the third-1 power conversion unit (2141) or the third-2 power conversion unit (2142) may have priority in connecting to the energy storage device (2230). The third-1 power conversion unit (2141) and the third-2 power conversion unit (2142) may be bidirectional converters. Alternatively, one of the third-1 power conversion unit (2141) and the third-2 power conversion unit (2142) may be a boost converter and the other a buck converter, or both may be boost converters or both may be buck converters. The switching element (2143) may include at least one of a relay, a mechanical switch, or an electronic switch.

As shown in FIG. 10, the plurality of third power conversion units may include two third power conversion units (2141, 2142) connected in parallel. The third-1 power conversion unit (2141) and the third-2 power conversion unit (2142) may each include input/output terminals connected to the outside. An energy storage device may be connected to the input/output terminals of the third-1 power conversion unit (2141) and the input/output terminals of the third-2 power conversion unit (2142). By including a switching element (2143) between the input/output terminals of the third-1 power conversion unit (2141) and the input/output terminals of the third-2 power conversion unit (2142), it can connect or disconnect the input/output terminals of the third-1 power conversion unit (2141) and the input/output terminals of the third-2 power conversion unit (2142).

Furthermore, as shown in FIG. 11, three or more third power conversion units (2141, 2142, 2144) connected in parallel may be included, depending on the number of third power conversion units (2141, 2142, 2144), and the number of switching elements (2143, 2145) connecting the input/output terminals of adjacent power conversion units may also include two or more.

The plurality of third power conversion units (2140) may be configured in various forms depending on their connection status with the energy storage device (22330).

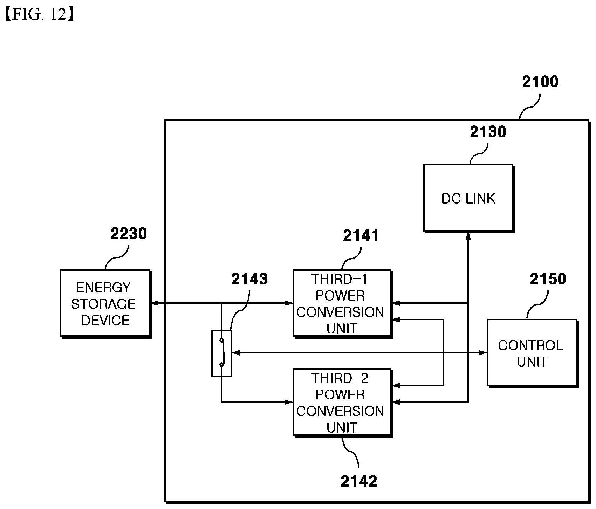

The plurality of third power conversion units may be connected to a single energy storage device (2230), and when the switching element (2143) is turned on, the third-1 power conversion unit (2141) and the third-2 power conversion unit (2142) may be connected to the single energy storage device (2230). As shown in FIG. 12, when a single energy storage device (2230) is connected, the switching element (2143) is turned on so that both the third-1 power conversion unit (2141) and the third-2 power conversion unit (2142) are connected to the energy storage device (2230) to perform power conversion. The input and output terminals of the third-1 power conversion unit (2141) are directly connected to the energy storage device (2230), and the input and output terminals of the third-2 power conversion unit (2142) may be connected to the energy storage device (2230) via the switching element (2143).

The switching element (2143), the third-1 power conversion unit (2141), and the third-2 power conversion unit (2142) can be controlled by the control unit (2150). The control unit (2150) can control the switching element (2143) to ensure that the third-1 power conversion unit (2141) and the third-2 power conversion unit (2142) are connected to a single energy storage device (2230).

The control unit (2150) can control the third-1 power conversion unit (2141) and the third-2 power conversion unit (2142), which are connected together to a single energy storage device (2230), using an interleaving method. By connecting two power conversion units (2141, 2142) to a single energy storage device (2230) and converting power in an interleaved manner, power can be converted efficiently, thereby reducing the heat generated during power conversion. The power conversion device (2100) according to an embodiment of the present invention comprises a first power conversion unit (2110), a second power conversion unit (2120), and a plurality of third power conversion units (2140) configured as a single device or module, which generates a significant amount of heat; however, by having the plurality of third power conversion units (2140) operate in an interleaved manner, heat generation can be reduced, allowing the device to include a large number of power conversion units.

The control unit (2150) controls the switching device (2143) so that the third-1 power conversion unit (2141) and the third-2 power conversion unit (2142) can be connected to a single energy storage device (2230), it is controlled such that a single power conversion unit performs power conversion rather than using an interleaving method, and the other power conversion unit can be used as a backup for control in the event of a failure or if a single power conversion unit is unable to perform power conversion. In addition, control can be performed in various other ways.

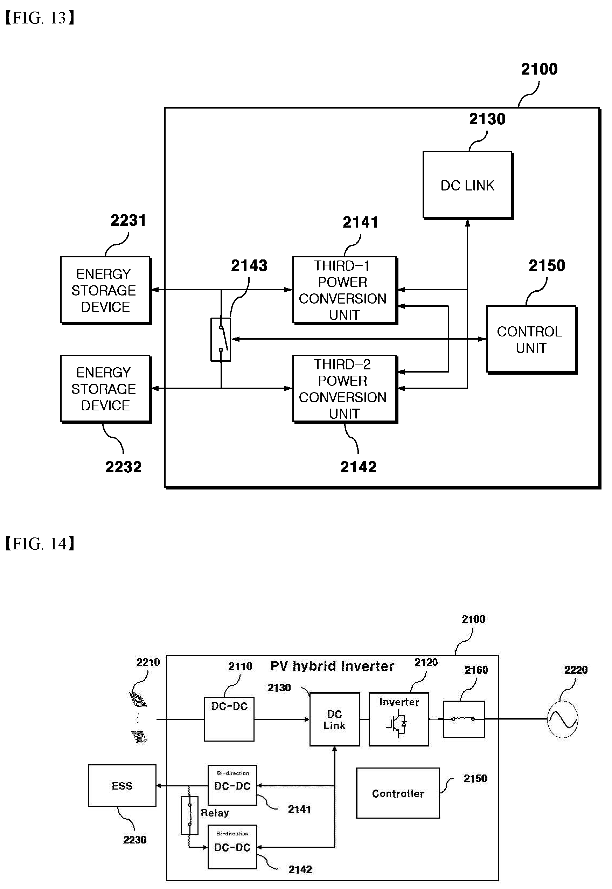

The multiple third power conversion units are connected to two energy storage devices (2231, 2232) rather than a single energy storage device (2230), and the switching element (2143) is turned off, the third-1 power conversion unit (2141) and the third-2 power conversion unit (2142) can each be individually connected to one of the two energy storage devices (2231, 2232). As shown in FIG. 13, when the two energy storage devices (2231, 2232) are connected, the switching element (2143) is turned off to disconnect the connection between the input/output terminals of the third-1 power conversion unit (2141) and the input/output terminals of the third-2 power conversion unit (2142), and each of the input/output terminals of the third-1 power conversion unit (2141) and the third-2 power conversion unit (2142) can be individually connected to one energy storage device (2231, 2232), respectively.

By connecting multiple energy storage devices, the amount of power that the energy storage devices can store can be increased, enabling the entire system to operate stably. When connecting multiple energy storage devices in series, it is sufficient for a single energy storage device connected to the power conversion device (2100) to be connected to the third power conversion unit (2140), the switching element (2143) is turned on to connect both the third-1 power conversion unit (2141) and the third-2 power conversion unit (2142) to the respective energy storage devices to perform power conversion.

Alternatively, when connecting multiple energy storage devices, the multiple energy storage devices may be connected in parallel. This allows for higher charging and discharging efficiency and speed compared to connecting multiple energy storage devices in series. In this case, when multiple energy storage devices (2231, 2232) connected in parallel are connected to a single power conversion unit (2140), voltage balancing must be performed between the multiple energy storage devices (2231, 2232). If voltage balancing is not performed between the multiple energy storage devices (2231, 2232), efficient charging and discharging cannot be achieved, and problems such as overcharging or over-discharging may occur.

The control unit (2150) can control the switching device (2143) so that the third-1 power conversion unit (2141) and the third-2 power conversion unit (2142) can be independently connected to one energy storage device (2231, 2232), respectively. Furthermore, the control unit (2150) can independently control the third-1 power conversion unit (2141) and the third-2 power conversion unit (2142). Since the third-1 power conversion unit (2141) and the third-2 power conversion unit (2142) are each connected to a single energy storage device and perform charging and discharging independently, efficient charging and discharging is possible without performing voltage balancing between the energy storage devices (2231, 2232).

The control unit (2150) determines which energy storage device (22330) is connected and controls the switching device (2143), the first power conversion unit (2141), and the second power conversion unit (2142) accordingly.

When the control unit (2150) establishes a communication connection with the energy storage device (2230), it turns off the switching element (2143) and measures the voltage of the third-1 power conversion unit (2141) and the voltage of the third-2 power conversion unit (2142). At this time, if only one of the voltages of the third-1 power conversion unit (2141) and the third-2 power conversion unit (2142) is measured, the switching element may be turned on.

When the control unit (2150) communicates with the energy storage device (2230) or a battery management system (BMS) of the energy storage device (2230), it determines that it is connected to the energy storage device (2230), and in order to determine whether the energy storage device (2230) is connected to the input/output terminals of the third-1 power conversion unit (2141) or the input/output terminals of the third-2 power conversion unit (2142), it first turns off the switching element (2143). Thereafter, the voltage of the third-1 power conversion unit (2141) and the voltage of the third-2 power conversion unit (2142) are measured; if only one voltage is detected, it is determined that the energy storage device (2230) is connected to the input/output terminals of that power conversion unit; the switching device (2143) is turned on to connect the third-1 power conversion unit (2141) and the third-2 power conversion unit (2142) to a single energy storage device (2230). At this time, the control unit (2150) can control the third-1 power conversion unit (2141) and the third-2 power conversion unit (2142) using an interleaving method.

Alternatively, the control unit (2150) turns on the switching device (2143) to connect the third-1 power conversion unit (2141) and the third-2 power conversion unit (2142) to a single energy storage device (2230), controls the system so that only one power conversion unit performs power conversion (rather than using an interleaving method), and the other power conversion unit can be used as a backup in case of a failure or if the single power conversion unit is unable to perform power conversion. Additionally, control can be performed in various other ways.

Alternatively, if only one of the voltages of the third-1 power conversion unit (2141) and the third-2 power conversion unit (2142) is measured, the control unit (2150) may connect only one power conversion unit to the energy storage device (2230) without turning on the switching device (2143).

When both the voltage of the third-1 power conversion unit (2141) and the voltage of the third-2 power conversion unit (2142) are measured, the control unit (2150) may turn off the switching device (2143) to control the third-1 power conversion unit (2141) and the third-2 power conversion unit (2142) so that they are each independently connected to one energy storage device (2231, 2232). Furthermore, the control unit (2150) can independently control the third-1 power conversion unit (2141) and the third-2 power conversion unit (2142). Since the third-1 power conversion unit (2141) and the third-2 power conversion unit (2142) are each connected to a single energy storage device and perform charging and discharging independently, efficient charging and discharging is possible without performing voltage balancing between the energy storage devices (2231, 2232).

As described above, by controlling multiple power conversion units and switching devices according to the number and connection status of the connected energy storage devices, efficient control suitable for each configuration is possible.

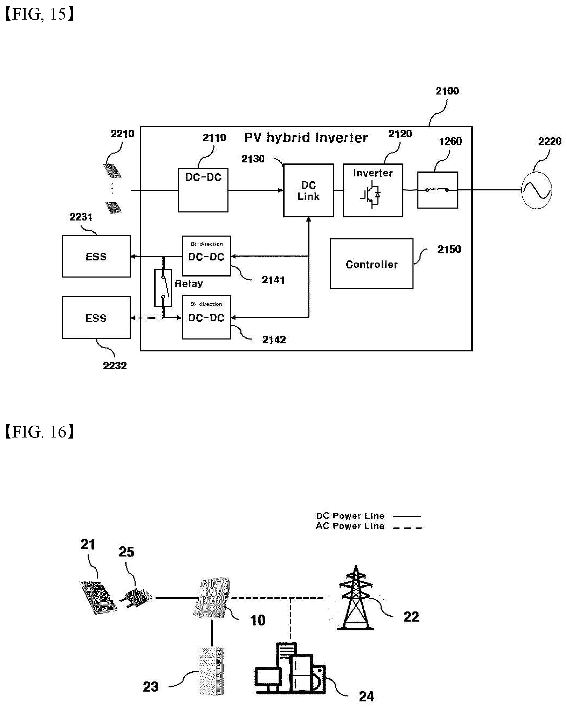

The power conversion device (2100) according to an embodiment of the present invention may be implemented as a photovoltaic (PV) hybrid inverter, as shown in FIGS. 14 and 15. The solar power generation panel (2210) is connected to the DC-DC converter (2110), and is connected to the grid (2220) via the relay (2160) and the inverter (2120); it is also connected to the energy storage system (ESS) (2230) and a plurality of bidirectional DC-DC converters (2141, 2142); The DC-DC converter (2110), inverter (2120), and multiple bidirectional DC-DC converters (2141, 2142) are connected in parallel to the DC link (2130), and the system may include a control unit (2150) that acts as a controller to manage each component.

As shown in FIG. 14, when a single energy storage device (2230) is connected, the control unit (2150) can control charging and discharging by turning on the relay and then controlling the multiple bidirectional DC-DC converters (2141, 2142) using an interleaving method.

As shown in FIG. 15, when two energy storage devices (2231, 2232) are connected, the control unit (2150) turns off the relay and then controls the multiple bidirectional DC-DC converters (2141, 2142) independently to control the charging and discharging of the two energy storage devices (2231, 2232) independently.

By controlling the multiple power conversion units and switching devices according to the number of connected energy storage devices and their connection status, efficient control suitable for each configuration is possible.

FIG. 16 illustrates a system in which a power conversion device according to the third embodiment of the present invention is applied.

A power conversion device (10) according to the third embodiment of the present invention can constitute a solar power generation system together with a solar power generation module (21), an energy storage device (23), a load (24), and a grid (22).

The power conversion device (10) according to an embodiment of the present invention is connected to the MLPE (25) of a photovoltaic (solar power generation) module (21), receives power output from the photovoltaic module (21), and can convert the received power to supply it to a load (24), transmit it to a grid (22), or charge an energy storage device (23). Alternatively, it can convert power stored in the energy storage device (23) to supply it to the load (24), or receive power from the grid (22) to supply it to the load (24) or convert it to charge the energy storage device (23). To transmit and receive power between each component, the power must be converted to a level suitable for each component. The power conversion device (10) according to an embodiment of the present invention is disposed between each component and serves to convert power.

A photovoltaic (power generation) module (21) may include module-level power electronics (MLPE, 25), which control the photovoltaic cells so that they operate at the maximum power point (MPP)-the operating point where power is maximized under various conditions. The MLPE (25) can be referred to as an optimizer. In solar power generation, depending on the characteristics of the relationship between current and voltage, as well as the relationship between voltage and power, the maximum power may not be achieved at maximum voltage, but rather at approximately 80% of maximum voltage. Since this maximum power point continuously changes depending on the magnitude of the voltage and current generated by the photovoltaic panel, the system must continuously search for the point where the maximum power can be achieved. In other words, to track maximum power rather than maximum voltage, the magnitude of the voltage and current can be varied to achieve maximum power. Specifically, the voltage can be decreased and the current increased, or the voltage can be increased and the current decreased, in the direction that increases power.

If a fire or malfunction occurs in a photovoltaic module (21), the voltage of the module must be rapidly dissipated. This is known as the RSP (Rapid Shut Down) function. In the event of a fire or malfunction, the MLPE (25) performs the RSD function to rapidly reduce the voltage of the photovoltaic module (21). This allows workers inspecting or repairing the photovoltaic module (21) to perform their tasks safely.

An MLPE (25) is installed at the output end of each of a plurality of photovoltaic modules (21), and the plurality of MLPEs (25) can be connected in series to the power conversion device (10). Each MLPE (25) is capable of performing monitoring and RSD functions for the photovoltaic modules (21).

Auxiliary power is required for the power conversion device (10) to operate or perform power conversion, and the power conversion device (10) can generate auxiliary power by receiving power input from at least one of the photovoltaic module (21), the energy storage device (23), and the grid (22). The power input from the photovoltaic module (21) serves as the primary power source, while the energy storage device (23) or the grid (22) may be used as secondary power sources; auxiliary power can be generated by receiving power from external sources according to various settings. If there is no power input from the energy storage device (23) or the grid (22), and the voltage of the power input to the power conversion device (10) from the photovoltaic module (21), which is operated in RSD mode by the MLPE (25), is equal to or less than a first voltage, it may be difficult to generate auxiliary power, and initial operation may not be performed.

The power conversion device according to an embodiment of the present invention can perform initial operation using a communication power supply unit. The following describes the process by which the power conversion device according to an embodiment of the present invention performs initial operation.

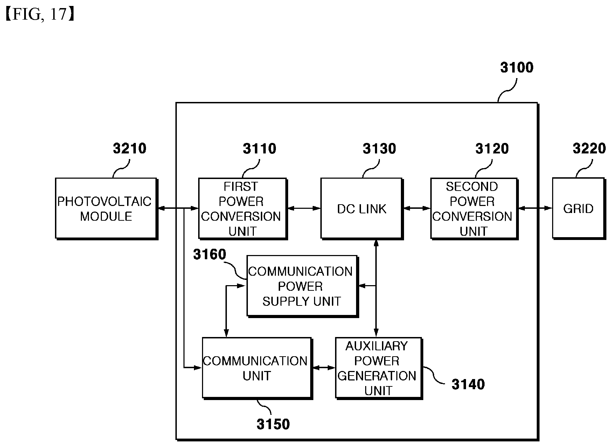

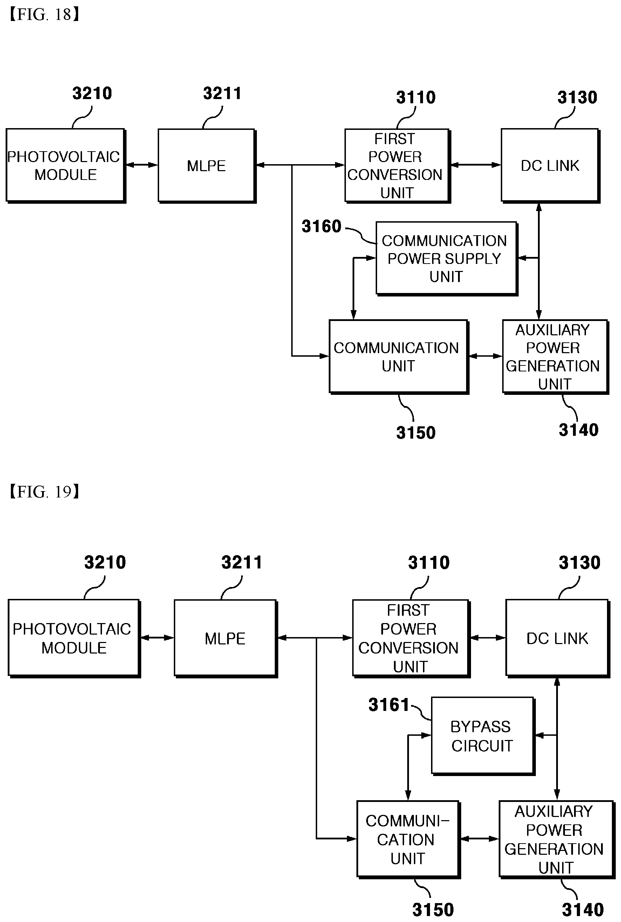

FIG. 17 is a block diagram of a power conversion device according to a third embodiment of the present invention, and FIG. 18 through FIG. 22 are drawings for explaining the configuration of the power conversion device according to the third embodiment of the present invention.

A power conversion device (3100) according to the third embodiment of the present invention may comprise a first power conversion unit (3110), a second power conversion unit (3120), a DC link (3130), an auxiliary power generation unit (3140), a communication unit (3150), and a communication power supply unit (3160), and may further include a control unit (3170).

The first power conversion unit (3110) is connected to a photovoltaic module (3210). The first power conversion unit (3110) receives and converts power input from the photovoltaic module (3210). The photovoltaic module (3210) may include an MLPE (3211), and the first power conversion unit (3110) may receive power input through the MLPE (3211). The communication unit is capable of performing power line communication (PLC) with the MLPE. Here, the first power conversion unit (3110) may include a DC-DC converter. It may include a DC-DC converter that converts the voltage of the DC power from the photovoltaic module (3210) to the voltage of the power to be output to the DC link (3130) and outputs it.

The second power conversion unit (3120) is connected to the grid (3220). The second power conversion unit (3120) may be connected to a load. The second power conversion unit (3120) can convert power input to the DC-link (3130) and output it to the grid (3220), or convert power input from the grid (3220) and output it to the DC-link (3130). Here, the first power conversion unit (3110) may include an inverter. It may include a bidirectional DC-AC inverter that converts power input to the DC-link (3130), which is DC power, from DC to AC and outputs it to the grid (3220), or converts power input from the grid (3220) from AC to DC and outputs it to the DC-link (3130).

The DC-link (3130) is connected between the first power conversion unit (3110) and the second power conversion unit (3120). The DC-link (3130) is connected between the first power conversion unit (3110) and the second power conversion unit (3120) and serves to transmit power output from each power conversion unit to the other power conversion unit. The DC-link (3130) may include a DC-link capacitor. Power input to the DC-link is stored in the DC-link capacitor and can be output through the DC-link capacitor.

The DC-link (3130) may be connected to an energy storage device (3230). In this case, the energy storage device (3230) may include a DC-DC converter that converts power input from the DC-link (3130) and outputs it to the energy storage device (3230), or converts power input from the energy storage device (3230) and outputs it to the DC-link (3130). It may include a DC-DC converter that converts the voltage of the DC power input to the DC-link (3130) into a voltage for charging the energy storage device (3230), or converts the voltage of the power from the energy storage device (3230) and outputs it to the DC-link (3130). The relevant DC-DC converter may be included in the power conversion device (3100) according to an embodiment of the present invention, rather than in the energy storage device (3230).

The auxiliary power generation unit (3140) generates auxiliary power source using power from the DC link (3130). The auxiliary power generation unit (3140) can generate auxiliary power that includes the power supply for driving the first power conversion unit (3110) and the second power conversion unit (3120) of the power conversion device (3100), the sensing power for the sensors, and the control power for the control unit (3170). Here, the auxiliary power source may include power for driving the first power conversion unit (3110) and the second power conversion unit (3120), which may comprise multiple switches, and may include switch drive power or gate power.

Power from the photovoltaic module (3210), power from the energy storage device (3230), and power from the grid (3220) may be input to the DC-link (3130), and the auxiliary power generation unit (3140) may generate auxiliary power using at least one of the powers input to the DC-link (3130). The auxiliary power generation unit (3140) can convert the power from the DC link (3130) into the power required for the auxiliary power supply.

The communication unit (3150) communicates with the control unit of the photovoltaic module (3210). The control unit of the photovoltaic module (3210) may include an MLPE (3211). As shown in FIG. 18, the communication unit (3150) can transmit and receive status information, drive signals, and RSD operation signals of the photovoltaic module (3210) via communication with the MLPE (3211). In this case, the communication unit (3150) can perform Power Line Communication (PLC) with the MLPE (3211). Communication can be performed using the power lines connected to the first power conversion unit (3110) and the solar power generation module (3210). Alternatively, wired communication can be performed via a separate wire, or wireless communication can be performed. The communication unit (3150) can communicate not only with the MLPE (3211) but also with external devices such as a higher-level controller.

The communication unit (3150) can transmit a signal to disable RSD operation when the MLPE (3211) is in RSD mode and power is not being supplied from the photovoltaic module (3210), thereby allowing power to be input from the photovoltaic module (3210). In this case, the communication unit (3150) requires an auxiliary power source to transmit the signal; however, when the MLPE (3211) is in RSD mode, its output is 1 to 3 V, and the string voltage of the photovoltaic module (3210) can be controlled to be less than a first voltage. Here, the first voltage may be 30 V.

When the MLPE (3211), which is the control device for the photovoltaic module (3210), performs an RSD (Rapid Shut Down) operation, the voltage of the DC link may drop below the first voltage. If there is no power input from the energy storage device (3230) or the grid (3220), and the photovoltaic module (3210) is in RSD mode due to the MLPE (3211), causing the voltage of the power input to the power conversion device (3100) to be equal to or lower than the first voltage, the auxiliary power generation unit (3140) finds it difficult to generate auxiliary power using the power from the DC link (3130).

To address this issue, the power conversion device (3100) according to an embodiment of the present invention includes a communication power supply unit (3160) in addition to an auxiliary power generation unit (3140). The communication power supply unit (3160) supplies power from the DC-link (3130) to the communication unit (3150). When the voltage of the DC-link (3130), driven by power input from the photovoltaic module (3210), is equal to or below a first voltage, the auxiliary power generation unit (3140) may have difficulty generating auxiliary power; however, the power may still be sufficient to enable the communication unit (3150) to communicate with the MLPE (3211). The communication power supply unit (3160) can supply power from the DC link (3130) directly to the communication unit (3150) rather than to the auxiliary power generation unit (3140), thereby enabling communication between the communication unit (3150) and the MLPE (3211). When power is supplied from the communication power supply unit (3160), the communication unit (3150) can transmit an RSD release signal or a drive signal to the MLPE (3211) to ensure that normal power is supplied from the photovoltaic module (3210). Consequently, when the voltage of the DC link (3130) exceeds the first voltage, the auxiliary power generation unit (3140) activates to generate auxiliary power, allowing the power conversion device (3100) to operate normally.

The communication power supply unit (3160) supplies power from the DC link (3130) to the communication unit (3150) when the voltage of the DC link (3130) is equal to or lower than the first voltage. Here, the first voltage may be set to the minimum operating voltage at which the auxiliary power generation unit (3140) operates, or it may be set lower than the minimum operating voltage; it may be set according to the specifications of the auxiliary power generation unit (3140) or by the user. For example, the first voltage may be 30 V.

The communication power supply unit (3160) may include a bypass circuit (3161). As shown in FIG. 19, the communication power supply unit (3160) is configured with a bypass circuit (3161) so that power from the DC-link (3130) is not input to the auxiliary power generation unit (3140) but is instead input directly to the communication unit (3150) via the bypass circuit (3161). The bypass circuit (3161) may include a switching element. When the switching element is turned on, it forms a bypass path, and when the switching element is turned off, the bypass path may be interrupted. The switching element may include a MOSFET.

The communication unit (3150) receives power from the communication power supply unit (3160) and transmits an operation signal to the MLPE (3211)-the control device for the photovoltaic module (3210)-to enable power to be supplied from the photovoltaic module (3210) to the DC-link (3130).

If the voltage of the DC link (3130) is greater than the first voltage, the communication power supply unit (3160) may stop supplying power from the DC link (3130) to the communication unit (3150). The communication power supply unit (3160) may not operate when the voltage of the DC link (3130) is a normal voltage greater than the first voltage. In this case, the auxiliary power generation unit (3140) may generate auxiliary power using the power from the DC link (3130).

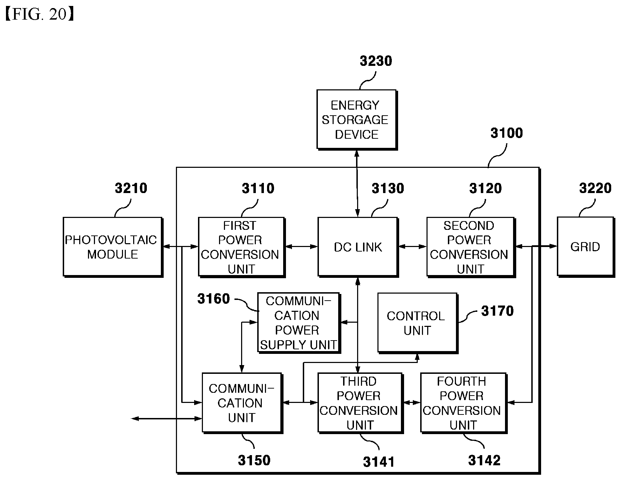

The auxiliary power generation unit (3140) may include a third power conversion unit (3141) and a fourth power conversion unit (3142). As shown in FIG. 20, the auxiliary power generation unit (3140) includes a third power conversion unit (3141) and a fourth power conversion unit (3142), and can supply the auxiliary power generated by the third power conversion unit (3141) to the control unit (3170) or the communication unit (3150).

The third power conversion unit (3141) can convert the DC power from the DC link (3130) to generate an auxiliary power supply. Since the power from the DC link (3130) and the auxiliary power supply are both DC, the DC power from the DC link (3130) can be converted to generate the auxiliary power supply. The third power conversion unit (3141) may include a DC-DC converter.

The fourth power conversion unit (3142) can convert AC power from the grid (3220) into DC power and supply it to the third power conversion unit (3141). The fourth power conversion unit (3142) can convert AC power from the grid (3220) into DC power so that it can be used to generate auxiliary power. The fourth power conversion unit (3142) may include an AC-DC converter that converts AC power into DC power.

The fourth power conversion unit (3142) can operate when the voltage of the DC link (3130) is lower than the second voltage. If the third power conversion unit (3141) generates an auxiliary power using power from the DC link (3130), but the voltage of the DC link (3130) drops below the second voltage, preventing the generation of an auxiliary power using power from the DC link (3130) or preventing the generation of sufficient auxiliary power, the fourth power conversion unit (3142) may operate to supply power to the third power conversion unit (3141). Here, the second voltage may be set to the minimum operating voltage at which the third power conversion unit (3141) operates, or it may be set lower than the minimum operating voltage; it may be set according to the specifications of the third power conversion unit (3141) or by the user. The second voltage may be higher than the first voltage. For example, the second voltage may be 300 V. Alternatively, the second voltage may be set to be equal to the first voltage.

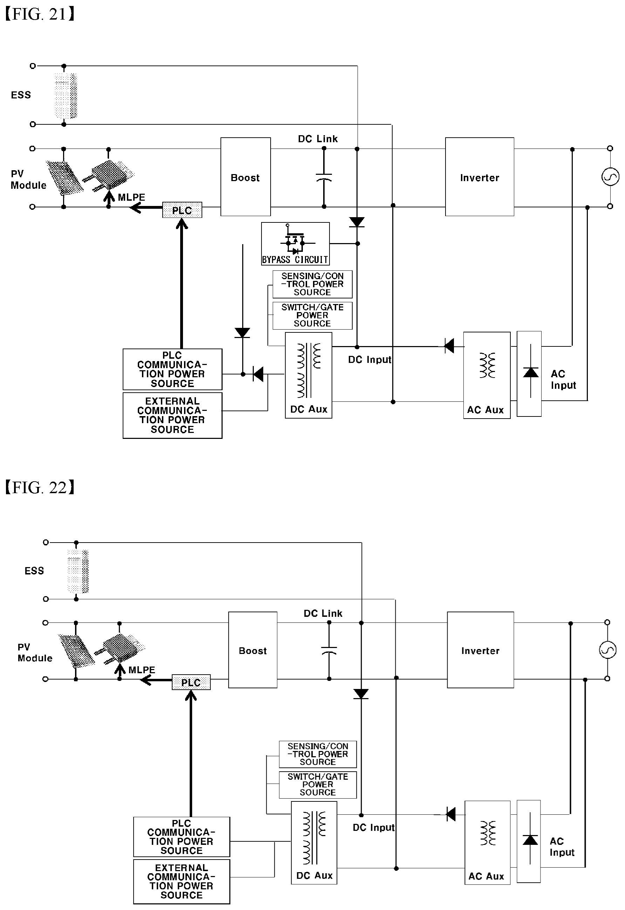

The power conversion device (3100) according to an embodiment of the present invention may be implemented as shown in FIG. 21. The photovoltaic (PV) module (3210) is connected to the DC link (3130) via the MLPE (3211) and the first power conversion unit (3110), which is a boost (3Boost) DC-DC converter. The DC link (3130) is connected to the grid (3220) via an inverter, which is a second power conversion unit (3120), and may be connected to an energy storage system (ESS, 3230). The DC Aux generator (3141), which is the third power conversion unit (3141) of the auxiliary power generation unit (3140), converts power from the DC link to supply sensing/control power and switch/gate power. It can also supply power for the communication unit (3150), including power for MLPE and PLC communication, as well as power for external communication with an external higher-level controller. The AC Aux generator, which is the fourth power conversion unit (3142) of the auxiliary power generation unit (3140), converts AC power from the grid (3220) into DC power and can supply it to the DC Aux generator, which is the third power conversion unit (3141). An AC Aux generator can operate when the DC-link voltage is 300 V or less. The bypass circuit, which is the communication power supply unit (3160), can supply a DC -link power to enable PLC communication. This power is supplied to the PLC communication power source (3150), which is part of the communication unit (3150), to facilitate PLC communication with the MLPE (3211). Through this, the power converter (3100) can be initially driven using power from the solar power generation module (3210). In this case, after disabling the RSD of the MLPE (3211), if the DC-link (3130) voltage reaches 120 V or higher using power from the photovoltaic module (3210), the power conversion device (3100) can be initially driven.

In contrast, in the case of the power conversion device according to the comparative example shown in FIG. 22, where the communication power supply unit (3160) is not implemented, the device will not operate when there is no power from the grid or the energy storage system (ESS) and the MLPE RSD is activated on the photovoltaic (PV) module, resulting in a DC-DC input from the PV module of less than 30 V.

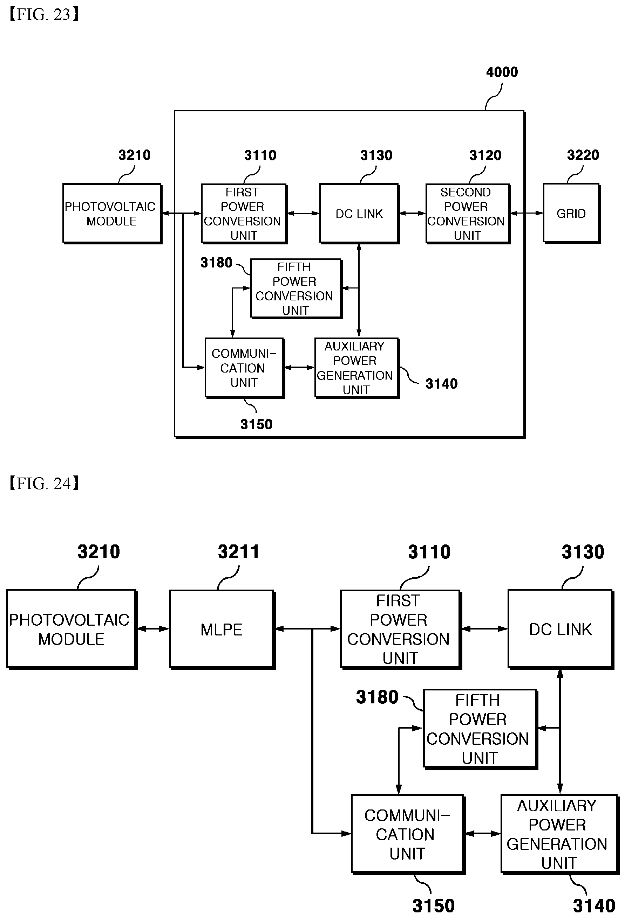

FIG. 23 is a block diagram of a power conversion device according to a fourth embodiment of the present invention, and FIG. 24 through FIG. 27 are drawings illustrating the configuration of the power conversion device according to the embodiment shown in FIG. 23.

A power conversion device (4000) according to the fourth embodiment of the present invention may comprise a first power conversion unit (3110), a second power conversion unit (3120), a DC-link (3130), an auxiliary power generation unit (3140), a communication unit (3150), and a fifth power conversion unit (3180), and may further include a control unit (3170).

The first power conversion unit (3110) is connected to the photovoltaic module (3210). The first power conversion unit (3110) receives power from the photovoltaic module (3210) and converts it. The photovoltaic module (3210) may include an MLPE (3211), and the first power conversion unit (3110) may receive power input through the MLPE (3211). The communication unit may perform power line communication (PLC) with the MLPE. Here, the first power conversion unit (3110) may include a DC-DC converter. It may include a DC-DC converter that converts the voltage of the DC power from the photovoltaic module (3210) to the voltage of the power to be output to the DC link (3130) and outputs it.

The second power conversion unit (3120) is connected to the grid (3220). The second power conversion unit (3120) may be connected to a load. The second power conversion unit (3120) can convert power input to the DC-link (3130) and output it to the grid (3220), or convert power input from the grid (3220) and output it to the DC-link (3130). Here, the first power conversion unit (3110) may include an inverter. It may include a bidirectional DC-AC inverter that converts power input to the DC-link (3130), which is DC power, from DC to AC and outputs it to the grid (3220), or converts power input from the grid (3220) from AC to DC and outputs it to the DC-link (3130).

The DC link (3130) is connected between the first power conversion unit (3110) and the second power conversion unit (3120). The DC link (3130) is connected between the first power conversion unit (3110) and the second power conversion unit (3120) and serves to transfer power output from each power conversion unit to the other. The DC link (3130) may include a DC link capacitor. Power input to the DC link is stored in the DC link capacitor and can be output through the DC link capacitor.

The DC link (3130) may be connected to an energy storage device (3230). In this case, the energy storage device (3230) may include a DC-DC converter that converts power input to the DC-link (3130) for output to the energy storage device (3230), or converts power input from the energy storage device (3230) for output to the DC-link (3130). It may include a DC-DC converter that converts the voltage of the DC power input to the DC-link (3130) into a voltage for charging the energy storage device (3230), or converts the voltage of the power from the energy storage device (3230) and outputs it to the DC-link (3130). The relevant DC-DC converter may be included in the power conversion device (4000) according to an embodiment of the present invention, rather than in the energy storage device (3230).

The auxiliary power generation unit (3140) generates auxiliary power using power from the DC link (3130). The auxiliary power generation unit (3140) can generate auxiliary power source that includes the power source driving the first power conversion unit (3110) and the second power conversion unit (3120) of the power conversion device (4000), the sensing power for the sensors, and the control power source for the control unit (3170). Here, the auxiliary power source may include power for driving the first power conversion unit (3110) and the second power conversion unit (3120), which may comprise multiple switches, and may include switch drive power or gate power.

Power from the photovoltaic module (3210), power from the energy storage device (3230), and power from the grid (3220) may be input to the DC-link (3130), and the auxiliary power generation unit (3140) may generate auxiliary power using at least one of the powers input to the DC-link (3130). The auxiliary power generation unit (3140) can convert the power from the DC link (3130) into the power required for the auxiliary power source.

The communication unit (3150) communicates with the control unit of the photovoltaic module (3210). The control unit of the photovoltaic module (3210) may include an MLPE (3211). As shown in FIG. 24, the communication unit (3150) can transmit and receive status information, drive signals, and RSD operation signals of the photovoltaic module (3210) via communication with the MLPE (3211). In this case, the communication unit (3150) can perform Power Line Communication (PLC) with the MLPE (3211). Communication can be performed using the power lines connected to the first power conversion unit (3110) and the photovoltaic module (3210). Alternatively, wired communication can be performed via a separate wire, or wireless communication can be performed. The communication unit (3150) can communicate not only with the MLPE (3211) but also with external devices such as a higher-level controller.

The communication unit (3150) can transmit a signal to disable the RSD function when the MLPE (3211) is in RSD mode and power is not being supplied from the photovoltaic module (3210), thereby allowing power to be supplied from the photovoltaic module (3210). In this case, the communication unit (3150) requires an auxiliary power source to transmit the signal; however, when the MLPE (3211) is in RSD mode, its output is 1 to 3 V, and the string voltage of the photovoltaic module (3210) can be controlled to be less than a first voltage. Here, the first voltage may be 30 V.

When the MLPE (3211), which is the control device for the photovoltaic module (3210), operates in RSD (Rapid Shut Down) mode, the DC-link voltage may drop below the first voltage. If there is no power input from the energy storage device (3230) or the grid (3220), and the photovoltaic module (3210) is in RSD mode due to the MLPE (3211), causing the voltage of the power input to the power conversion device (4000) to be equal to or less than the first voltage, the auxiliary power generation unit (3140) finds it difficult to generate auxiliary power using the power from the DC link (3130).

To address this issue, the power conversion device (4000) according to an embodiment of the present invention includes a fifth power conversion unit (3180) in addition to the auxiliary power generation unit (3140). The fifth power conversion unit (3180) converts the power from the DC-link (3130) and supplies it as power to the communication unit (3150). When the voltage of the DC link (3130), driven by power input from the photovoltaic module (3210), is below a first voltage, it is difficult for the auxiliary power generation unit (3140) to generate auxiliary power; however, the fifth power conversion unit (3180) may have sufficient power to convert the power required for the communication unit (3150) to communicate with the MLPE (3211). The fifth power conversion unit (3180) can convert the power from the DC link (3130) and supply it to the communication unit (3150) rather than the auxiliary power generation unit (3140), thereby enabling communication between the communication unit (3150) and the MLPE (3211).

When the communication unit (3150) receives power from the fifth power conversion unit (3180), it can transmit an RSD release signal or a drive signal to the MLPE (3211) to ensure that normal power is supplied from the photovoltaic module (3210). Consequently, if the voltage of the DC link (3130) exceeds the first voltage, the auxiliary power generation unit (3140) activates to generate auxiliary power, allowing the power conversion device (4000) to operate normally.

The fifth power conversion unit (3180) converts the power from the DC link (3130) and supplies it to the communication unit (3150) when the voltage of the DC link (3130) is equal to or lower than the first voltage. Here, the first voltage may be set to the minimum operating voltage at which the auxiliary power generation unit (3140) operates, or it may be set to a value lower than the minimum operating voltage; it may be set according to the specifications of the auxiliary power generation unit (3140) or by the user. For example, the first voltage may be 30 V.

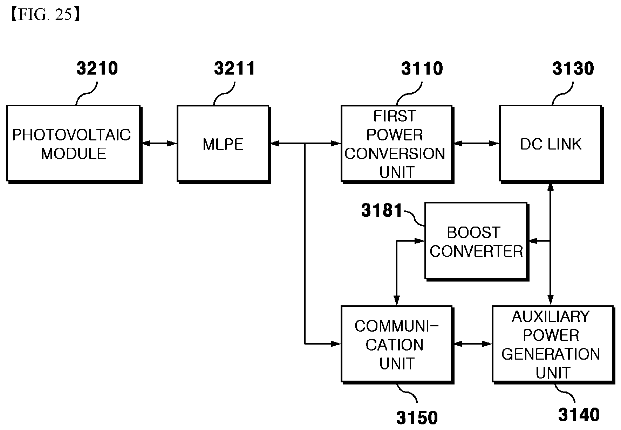

The fifth power conversion unit (3180) may include a DC-DC converter. Here, the DC-DC converter may be a boost converter (3181). As shown in FIG. 25, the fifth power conversion unit (3180) is configured as a boost converter (3181), allowing power from the DC link (3130) to be input to the communication unit (3150) as boosted power via the boost converter (3181), rather than being input directly to the auxiliary power generation unit (3140). The fifth power conversion unit (3180) may include a boost converter (3181), switching devices, and a control unit that senses the DC-link voltage to control the switching elements. When the DC-link voltage falls below the first voltage, the switching element of the fifth power conversion unit (3180) is turned on, and when the DC-link voltage is greater than the first voltage, the switching element of the fifth power conversion unit (3180) is turned off. When the switching element is turned on, a path to the boost converter (3181) is formed, and when the switching element is turned off, the path to the boost converter (3181) may be interrupted. The switching element may include a MOSFET.

The communication unit (3150) may receive power from the fifth power conversion unit (3180) and transmit an operation signal to the MLPE (3211)-the control device for the photovoltaic module (3210)-to enable power to be supplied from the photovoltaic module (3210) to the DC link (3130).

If the voltage of the DC link (3130) is higher than the first voltage, the fifth power conversion unit (3180) may stop converting the power from the DC link (3130) to supply it as power to the communication unit (3150). The fifth power conversion unit (3180) may not operate when the voltage of the DC link (3130) is a normal voltage greater than the first voltage. At this time, the auxiliary power generation unit (3140) can generate auxiliary power using the power from the DC link (3130).

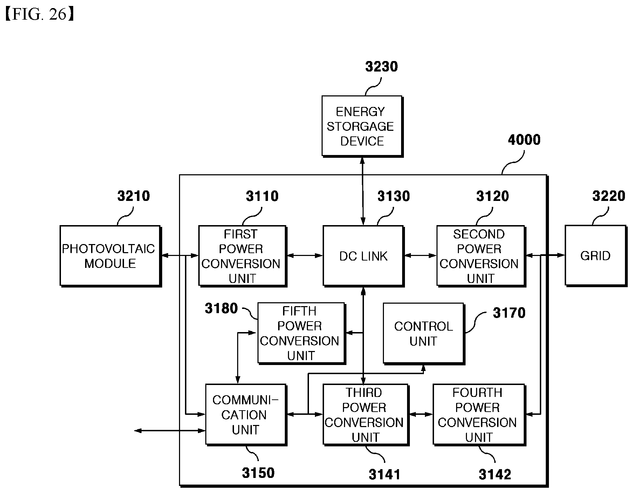

The auxiliary power generation unit (3140) may include a third power conversion unit (3141) and a fourth power conversion unit (3142). As shown in FIG. 26, the auxiliary power generation unit (3140) includes a third power conversion unit (3141) and a fourth power conversion unit (3142), and can supply the auxiliary power generated by the third power conversion unit (3141) to the control unit (3170) or the communication unit (3150).

The third power conversion unit (3141) can generate the auxiliary power by converting the DC power of the DC-link (3130). Since the power of the DC-link (3130) and the auxiliary power are both DC, the auxiliary power can be generated by converting the DC power of the DC-link (3130). The third power conversion unit (3141) may include a DC-DC converter.

The fourth power conversion unit (3142) can convert AC power from the grid (3220) into DC power and supply it to the third power conversion unit (3141). The fourth power conversion unit (3142) can convert AC power from the grid (3220) into DC power so that it can be used to generate auxiliary power. The fourth power conversion unit (3142) may include an AC-DC converter that converts AC power into DC power.

The fourth power conversion unit (3142) can operate when the voltage of the DC link (3130) is lower than the second voltage. If the third power conversion unit (3141) generates an auxiliary power source using the power from the DC link (3130), but the voltage of the DC link (3130) drops below the second voltage, making it impossible to generate an auxiliary power source using the power from the DC link (3130) or preventing the generation of sufficient auxiliary power, the fourth power conversion unit (3142) may operate to supply power to the third power conversion unit (3141). Here, the second voltage may be set to the minimum operating voltage at which the third power conversion unit (3141) operates, or it may be set lower than the minimum operating voltage; it may be set according to the specifications of the third power conversion unit (3141) or by the user. The second voltage may be higher than the first voltage. For example, the second voltage may be 300 V. Alternatively, the second voltage may be set to be equal to the first voltage.

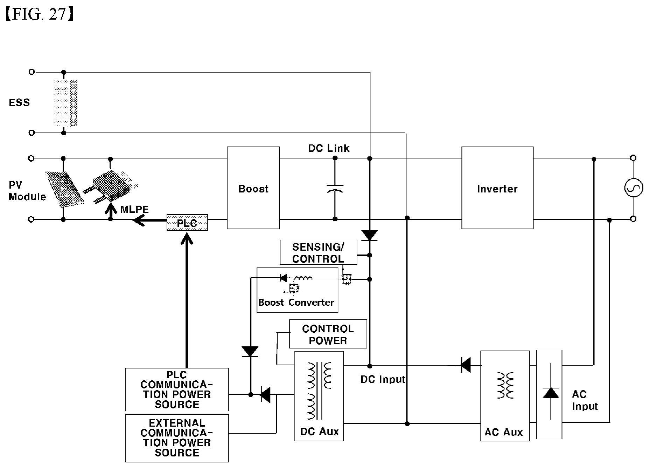

The power conversion device (4000) according to an embodiment of the present invention may be implemented as shown in FIG. 27. The photovoltaic (PV) module (3210) is connected to the DC link (3130) via the MLPE (3211) and the first power conversion unit (3110), which is a boost DC-DC converter. The DC link (3130) is connected to the grid (3220) via an inverter (3120), which serves as the second power conversion unit (3120), and may also be connected to an energy storage system (ESS, 3230). The DC Aux power supply unit (3141), which is the third power conversion unit (3140) of the auxiliary power generation unit (3140), converts power from the DC link to supply sensing/control power and switch/gate power. It can also supply power for the communication unit (3150), including power for MLPE and PLC communications, as well as power for external communication with a higher-level controller. The AC Aux generator, which is the fourth power conversion unit (3142) of the auxiliary power generation unit (3140), converts AC power from the grid (3220) into DC power and supplies it to the DC Aux generator, which is the third power conversion unit (3141). The AC Aux generator can operate when the DC-link voltage is 300 V or less. The boost converter, which is the fifth power conversion unit (3180), can realize the PLC communication with the MLPE (3211) by boosting the DC-link power source at approximately 10-30 V-even when the RSD of the MLPE (3211) is active-if the grid (3220) and energy storage device (3230) are powered off but the photovoltaic module (3210) is powered on. Consequently, if the DC-link (3130) voltage reaches 120 V or higher using power from the photovoltaic module (3210) after the MLPE (3211) RSD is disabled, the power conversion device (4000) can be initially driven.

A variation of the present embodiment may include some components from one of the first and second embodiments together with some components from another embodiment. For example, a variation may include the first embodiment, but omit some components of the first embodiment and include corresponding components of the second embodiment. Alternatively, a variation may include the second embodiment, but with some components of the second embodiment omitted and corresponding components of the first embodiment included. Similarly, a third or fourth embodiment may include corresponding components.

The features, structures, and effects described in the above embodiments are included in at least one embodiment and are not necessarily limited to a single embodiment. Furthermore, the features, structures, and effects illustrated in each embodiment may be combined or modified for other embodiments by a person skilled in the art to which the embodiments pertain. Therefore, matters related to such combinations and modifications should be interpreted as falling within the scope of the embodiments.

As described above, the present invention has been explained using specific details, such as particular components, as well as limited embodiments and drawings; however, these are provided solely to aid in a more general understanding of the invention. The invention is not limited to the above embodiments, and a person skilled in the art may make various modifications and variations based on the above description.

Therefore, the concept of the present invention should not be defined as being limited to the described embodiments, and not only the claims described below but also all modifications that are equivalent or equivalent to these claims shall be considered to fall within the scope of the concept of the present invention.

## Claims

1. A power conversion device, comprising:
a first switching unit that is turned on when a power failure occurs;
a power failure signal generation unit configured to supply auxiliary power to a power conversion unit when the first switching unit is turned on, and transmit a power failure signal;
a control unit configured to request a power supply to a vehicle and control the power conversion unit; and
the power conversion unit configured to convert power under control of the control unit;
wherein the power conversion unit receives power from the vehicle, converts the power and outputs it to a load.

2. The power conversion device of claim 1, comprising:
a battery connected to the power failure signal generation unit,
wherein the power failure signal generation unit receives power from the battery when the first switching unit is turned on and output it to the power conversion unit.

3. The power conversion device of claim 1,
wherein the power failure signal generation unit comprises a voltage reception unit configured to receive a first voltage from the power conversion unit, and
wherein the power failure signal generation unit transmits the power failure signal to the power conversion unit if the voltage reception unit does not receive the first voltage when the first switching unit is turned on.

4. The power conversion device of claim 3,
wherein the power failure signal generation unit does not generate the power failure signal if the voltage reception unit receives the first voltage when the first switching unit is turned on.

5. The power conversion device of claim 3,
wherein, the power conversion unit supplies the first voltage to the power failure signal generation unit when receiving power from the vehicle.

6. The power conversion device of claim 1,
wherein the first switching unit comprises a physical switch operated by an external force.

7. The power conversion device of claim 1, comprising:
a communication unit configured to operate using the auxiliary power during a power failure and transmits the power supply to the vehicle.

8. The power conversion device of claim 7,
wherein the communication unit receives status information regarding the vehicle's battery from the vehicle and transmits it to the control unit.

9. The power conversion device of claim 1,
wherein the load comprises a household load.

10. The power conversion device of claim 1,
wherein the power conversion unit converts power input from a grid and outputs it to the vehicle, and converts power input from the vehicle and outputs it to the load.
